# EUROPEAN PATENT SPECIFICATION

(11) **EP 2 051 840 B1**
(45) Date of publication and mention of the grant of the patent: **07.03.2012**
(21) Application number: 07762228.0
(22) Date of filing: 17.05.2007
(51) Int. Cl.: B29C 45/14, B29C 70/78, C08J 5/18, C08J 7/04, C08L 69/00

(54) **POLYCARBONATE GLAZING SYSTEM HAVING SOLAR REFLECTING PROPERTIES**
POLYCARBONATVERGLASUNG MIT SONNENLICHTREFLEKTIERENDEN EIGENSCHAFTEN
SYSTÈME DE FEUILLETAGE POLYCARBONATE PRÉSENTANT DES PROPRIÉTÉS RÉFLÉCHISSANT LA LUMIÈRE SOLAIRE

(30) Priority: 09.06.2006 US 450732
(43) Date of publication of application: 29.04.2009
(60) Divisional application: 11173660.9
(73) Proprietor: Exatec, LLC., Wixom, MI 48393 (US)
(72) Inventor: HEDDERICH, Wilfried, 40724 Hilden (DE); LI, Chengtao, Novi, MI 48374 (US)
(74) Representative: Solf, Alexander
(86) International application number: PCT/US2007/069136
(87) International publication number: WO 2007/146540

(56) References cited:
- EP-A- 1 577 084
- WO-A-2007/143359
- DE-A1- 19 537 263
- US-A1- 2002 182 389

## Description

### BACKGROUND

### 1. Field of the Invention:

The present invention generally relates to plastic panels for use in automobiles and other structures.

### 2. Description of the Known Technology:

Plastic materials, such as polycarbonate (PC) and polymethyl methyacrylate (PMMA), are currently being used in the manufacturing of numerous automotive parts and components, such as B-pillars, headlamps, and sunroofs. Automotive window modules represent an emerging application for these plastic materials because of various advantages in the areas of styling/design, weight savings, and safety/security. More specifically, plastic materials offer the automotive manufacturer the ability to reduce the complexity of the window assembly through the integration of functional components into the molded plastic module as well as to distinguish their vehicle from a competitor's vehicle by increasing overall design and shape complexity. The use of light weight plastic window modules may facilitate both a lower center of gravity for the vehicle and improved fuel economy. Additionally, plastic window modules increase the overall safety of a vehicle by enhancing the retention of occupants during a rollover accident.

One such way manufacturers may use transparent plastic panels to distinguish their vehicle from a competitor's vehicle is to add a stylized ink layer or overmolded less transparent color frame within the transparent plastic panel. This stylized ink layer or overmolded frame may be stylized in such a way to cover a portion of at least a portion of the transparent plastic panel. It has been discovered that as the stylized ink layer or overmolded frame absorbs solar energy, the surface temperature of the transparent panel can vary. More specifically, the portion of the transparent panel having the stylized ink layer or overmolded frame will have a higher surface temperature than the portion of the transparent panel not having the stylized ink layer or overmolded frame. After the transparent panel cools, the portion of the transparent panel having the stylized ink layer or overmolded frame may experience warping, affecting the weatherability and the operating life of the transparent plastic panel.

EP 1 577 084 A discloses plastic laminated plates for vehicle movement comprising an inner layer of plastic polycarbonate, an outer layer of plastic acrylate and a thermoplastic polyurethane arranged in between the two layers. EP 2 024 428 A1, which was filed before but published after the priority date of this Application, discloses a window assembly with photochromatic properties. The window assembly includes a substrate being adjacent to a coating. A photochromatic film is located between the substrate and the coating, whereby the photochromatic film darkens when the window assembly is exposed to ultraviolet light.

Therefore, it is desired to provide a system which will minimize the amount of solar energy collected in portions of a transparent panel having a stylized ink layer or overmolded frame.

### BRIEF SUMMARY

In overcoming the drawbacks and limitations of the known art, a window system having solar control properties is provided. In one embodiment, the window system includes a substrate having a first side and a second side, a first plasma layer adjacent to the first side of the substrate, a first weathering layer located between the first side of the substrate and the plasma layer and characterized by a solar control assembly located between the first side of the substrate and the weathering layer, the solar control assembly further comprises a solar control system located between two plastic film layers, and an ink layer provided on the solar control assembly and located between the first side of the substrate and the solar control assembly.

In addition an additional weathering layer and a plasma layer may be applied to both the solar control assembly and the second side of the substrate.

In another embodiment, first weathering layer is a weathering film. The weathering film may be made of acrylic, polyurethane, flouropolymer, ionomer, siloxane, and combinations thereof. In addition, a plasma layer may be applied to the solar control assembly and a second plasma layer and a weathering layer may be applied to the second side of the substrate. By so doing, the plasma layer will add excellent UV protection as well as long term weatherability.

These and other advantages, features and embodiments of the invention will become apparent from the drawings, detailed description and claims, which follow.

### BRIEF DESCRIPTION OF THE DRAWINGS

Figure 1 is a perspective view of an automobile having a window assembly with solar reflecting properties embodying the principles of the present invention;

Figure 2 is a top view of the window assembly embodying the principles of the present invention;

Figure 3 is a top view of another embodiment of the window assembly embodying the principles of the present invention;

Figure 4 is a cross sectional view of a portion of the window assembly generally taken along lines 4-4 in Figure 2;

Figure 4A is a magnified view of a portion of a solar control system shown in Figure 4;

Figure 5 is a cross sectional view similar to Figure 4 of another embodiment of the window assembly having an additional weathering layer and a plasma layer;

Figure 6 is a cross sectional view of a portion of the window assembly having a solar control system coupled to plastic film layers via adhesion promoting layers generally taken along lines 4-4 in Figure 2;

Figure 7 is a cross sectional view similar to Figure 6 of another embodiment of the window assembly having an additional weathering layer and a plasma layer,

Figure 8 is a cross sectional view of a portion of the window assembly having a weathering film generally taken along lines 4-4 in Figure 2;

Figure 9 is a cross sectional view similar to Figure 8 of another embodiment of the window assembly having an additional weathering layer and a plasma layer;

Figure 10 is a cross sectional view of a portion of the window assembly having a solar control system coupled to a plastic film layer and a weathering film via adhesion promoting layers generally taken along lines 4-4 in Figure 2;

Figure 11 is a cross sectional view similar to Figure 10 of another embodiment of the window assembly having an additional weathering layer and a plasma layer;

Figure 12 is a cross-sectional view similar to Figure 10 of another embodiment of the window assembly having a solar control system located between the weathering film and the plasma layer;

Figure 13 is a cross-sectional view similar to Figure 12 of another embodiment of the window assembly having an additional weathering layer and plasma layer;

Figure 14 is a cross-sectional view similar to Figure 7 of another embodiment of the window assembly having an overmolded black frame; and

Figure 15 illustrates a method of making the window assembly with solar reflecting properties embodying the principles of the present invention.

### DETAILED DESCRIPTION

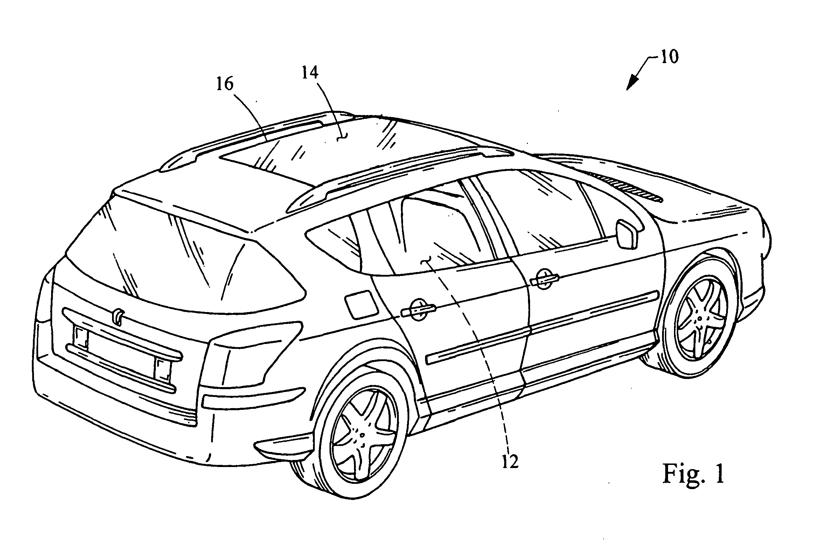

Referring to Figure 1, an automobile 10 incorporating the present invention is shown therein. The automobile 10 includes an occupant compartment 12 located within the interior of the automobile 10 and a window assembly 14 mounted via a frame 16 to the automobile 10.

Although this description describes using the window assembly 14 as a sun roof or moon roof, the invention is equally applicable to other areas of the automobile 10. For example, the window assembly 14 may be appropriately located and dimensioned to be used as a driver side window, a passenger side window, rear windows, a front windshield and/or any other windows the automobile 10 may have.

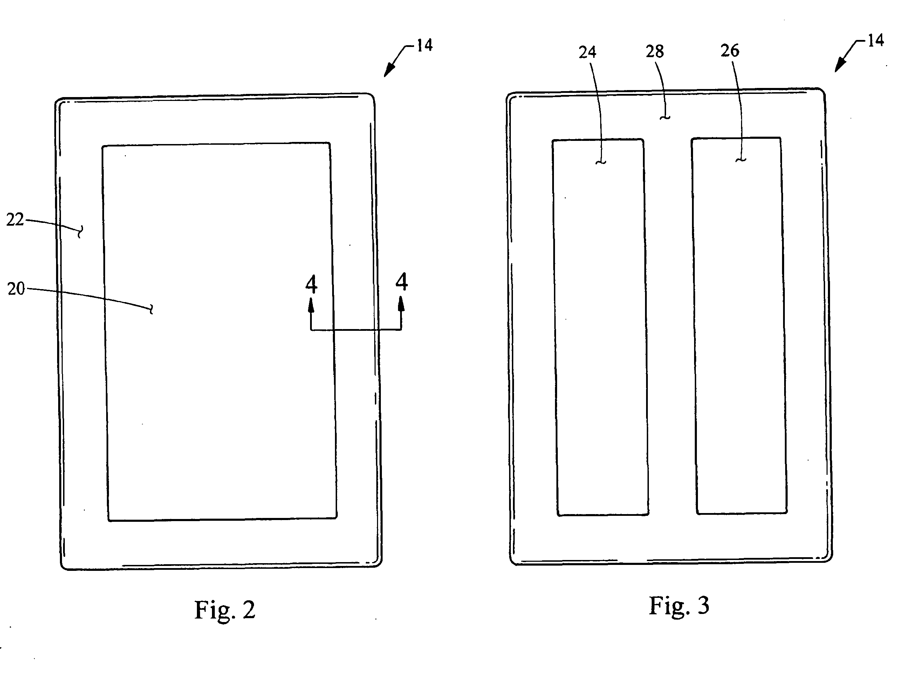

Referring to Figure 2, a more detailed view of the window assembly 14 is shown. As shown therein, the window assembly 14 has a transparent viewing area 20 and a stylized ink area 22. Alternatively, the stylized ink area 22 may be a black component frame area. The transparent viewing area 20 is similar to a conventional window assembly in that the transparent area 20 allows light to pass through and enter the occupant compartment 12. The stylized ink area 22 is similar to the transparent area 20; however, the stylized ink area prevents the transmission of light into the occupant compartment 12.

Another embodiment of the window assembly 14 is shown in Figure 3. In this layout, the window assembly 14 has two transparent areas 24, 26 surrounded and separated by a stylized ink area 28. Similar to the previous embodiment, the transparent area 24 is similar to a conventional window assembly while the stylized ink area 28 prevents the transmission of light to the occupant compartment 12. Obviously, the stylized ink area 28 may be laid out as desired in any number of patterns, designs or configurations.

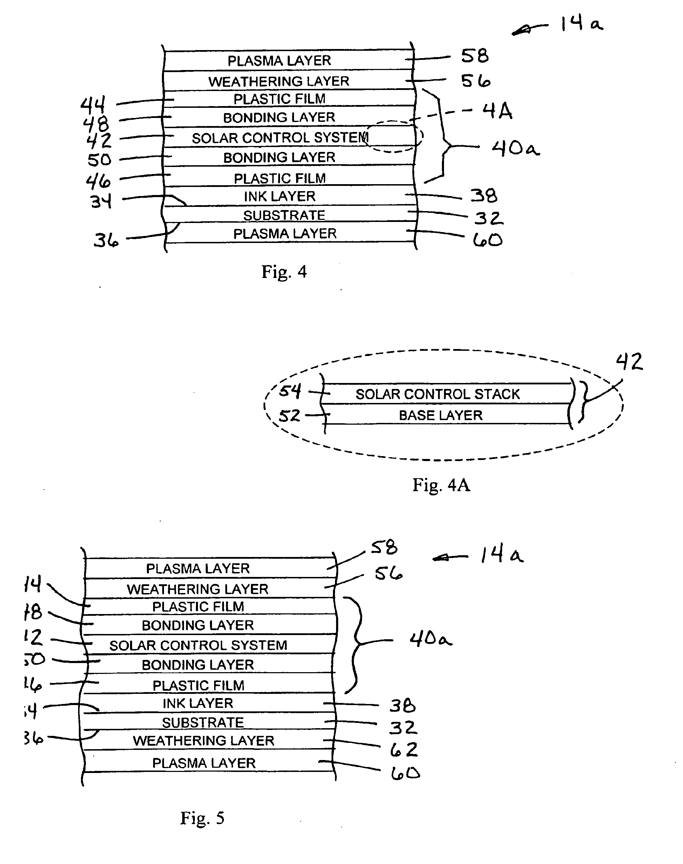

Referring to Figure 4, a schematic cross section, generally taken along lines 4-4 in Figure 2 is shown therein. The window assembly 14a includes a rigid substrate 32 having a top side 34 and a bottom side 36. The substrate 32 may be made of polycarbonate, polyamide, thermoplastic polyuretane (TPU), acrylonitrile-styreneacrylonitrile, polymethyl methacrylate, polyester, polycarbonate/polyester blends, acrylonitrile-butadiene-styrene, and combinations thereof. The substrate 32 may also be made of thermosetting resins. Additionally, glass fibers may be added to the substrate 32. Preferably, the substrate 32 is transparent. Above the top side 34 of the substrate 32 may be an ink layer 38. The ink layer 38 prevents the transmission of light into the occupant compartment 12, as best shown in Figure 1.

Above the ink layer 38 is a solar control assembly 40a. The solar control assembly 40a includes a solar control system 42 located between a first plastic film layer 44 and a second plastic film layer 46, both of which are not rigid. Attaching the solar control system 42 to the first and second plastic film layers 44, 46 are first and second bonding layers 48, 50, respectively. Generally, the first and second plastic film layers 44, 46 are made of PC, PMMA, polyester, polyamide, TPU and combinations thereof. The bonding layers 48, 50 are typically made from at least one of polyurethane, acrylic, polyester aromatic polycarbonate, polyester-carbonate, polycyanoacrylate, copolyester hot melt adhesive and combinations thereof. "Combination" is broadly defined to include blends, mixtures or copolymers.

Referring to Figure 4A, a magnified view of a portion of the solar control system 42 is shown. The solar control system 42 includes a base layer 52 connected to a solar control stack 54. The base layer 52 may be made form at least one of polyethylene terephtalate, polycarbonate, polycarbonate/polyester blend, polyvinyl butyral, polymethyl methyacrylate and combinations thereof.

The solar control stack 54 may be made of a polymer stack or a metallic dielectric stack. The metallic dielectric stack includes at least one metallic layer having a first refractive index and at least one dielectric layer having a second refractive index. The metallic layer and the dielectric layer are stacked on top of each other forming the metallic dielectric stack. The metallic layer may be made from from at least one of silver or silver alloys, gold, copper, platinum, rhenium, aluminum, nickel, chromium or alloys and combinations thereof. The dielectric layer may be made from tin oxide (SnO₂), zinc oxide (ZnO), indium oxide (In₂O₃), indium tin oxide (ITO), titanium dioxide (TiO₂), SiOₓC_{y}H_{z}, antimony tin oxide (ATO), silicon dioxide (SiO₂), aluminium dioxide (Al₂O₃), silicon nitride (Si₃N₄), zinc sulphide (ZnS), and combinations thereof.

The polymer stack includes at least one first polymeric layer having a first refractive index and at least one second polymeric layer having a second refractive index. The first polymeric layer and the second polymeric layer are stacked on top of each other forming the polymer stack. The first and second polymeric layers may be made from polyester, acrylic, polyester acrylic blend or copolymer.

Both the polymer stack and the metallic dielectric stack work in similar fashion. The polymer stack and the metallic dielectric stack form a selective optical interference system that makes use of the fact that spectral functions of transmittance and reflectance within a discrete wavelength range can be set up in such a way that heat protection or solar control properties are generated. For example, if a beam of light crosses the interface between two materials with different refractive indices, the beam's path is altered depending on the difference in the refractive indices of the materials. The greater the difference, the greater the refraction of the beam. By utilizing layers with different refractive indices, heat protection and/or solar control properties can be achieved.

Located above the solar control assembly 40a is a weathering layer 56. The weathering layer 56 is a material from at least one of acrylic, polyurethane, silicon hard coating, or a combination of these materials to provide high weatherablity and long term ultraviolet protection. The weathering layer 56 is applied by one method selected from the group of flow coating, dip coating, spray coating, in-mold coating, curtain coating, and the like. Moreover, in another embodiment of the present invention silicon/nanoparticles may be blended into the material of the weathering layer 56 or a silioxyane copolymer is formed into the weathering layer 56 by polymerization. Additionally, the weathering layer 56 may include ultraviolet absorbers.

A first plasma layer 58 is a "glass-like" coating deposited on the weathering layer 56 by plasma enhanced chemical vapor deposition (PECVD) process, expanding thermal plasma PECVD, plasma polymerization, photochemical vapor deposition, ion beam deposition, ion plating deposition, cathodic arc deposition, sputtering, evaporation, hollow-cathode activated deposition, magnetron activated deposition, activated reactive evaporation, thermal chemical vapor deposition, and a sol-gel coating process or the like. A second plasma layer 60 is deposited on the bottom side 36 of the substrate 32. The plasma layers 58, 60, in one embodiment of the present invention, are a multilayer plasma coating. The plasma layers 58, 60 may be multiple layers and may contain an ultraviolet absorber.

The plasma layers 58, 60 may be made of aluminum oxide, barium fluoride, boron nitride, hafnium oxide, lanthanum fluoride, magnesium oxide, scandium oxide, silicon monoxide, silicon dioxide, silicon nitride, silicon oxy-nitride, silicon oxy-carbide, hydrogenated silicon oxy-carbide, silicon carbide, tantalum oxide, titanium oxide, tin oxide, yttrium oxide, zinc oxide, zinc selenide, zinc sulphide, zirconium oxide, and zirconium titanate. Furthermore, the plasma layers 58, 60 may comprises multiple sub-layers differing in composition or structure.

Referring to Figure 5, another embodiment of the window assembly 14a is shown. This embodiment is similar to the embodiment shown in Figure 4 with the exception that a second weathering layer 62 is provided in the assembly 14a at a location between the bottom side 36 of the substrate 32 and the second plasma layer 60. The second weathering layer 62 is similar in construction to the first weathering layer 56 discussed above.

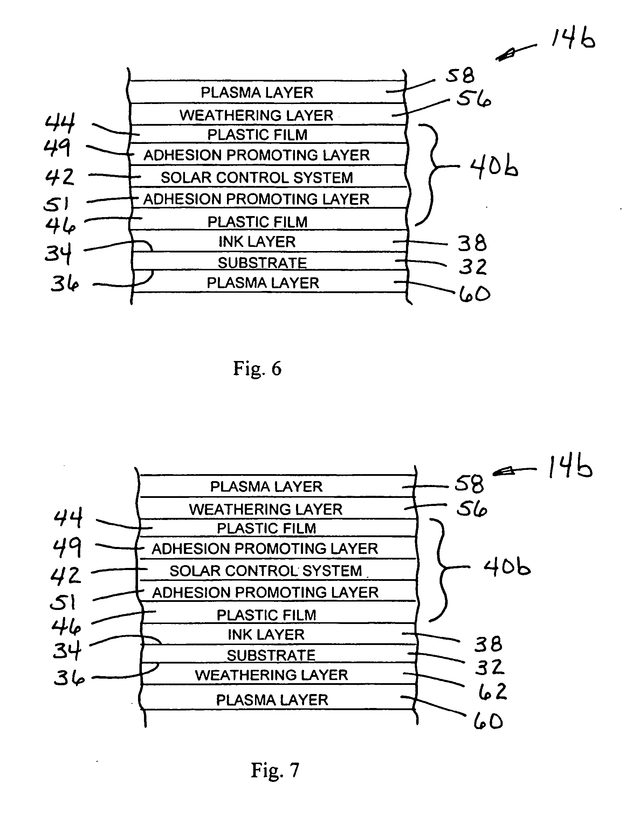

Referring to Figure 6, another embodiment of a window assembly 14b according to the principles of the present invention is shown therein. The window assembly 14b is similar to the window assembly 14a shown in Figure 4 with the exception that its solar control assembly 40b differs from the solar control assembly 40a of Figure 4.

The solar control assembly 40b includes a first and second plastic film layers 44, 46 which are similar to the first and second plastic film layers 44, 46 of Figure 4. Similarly, the solar control assembly 40b includes a solar control system 42 which is similar to the solar control system 42 of Figure 4. The difference is that the solar control system 42 is attached to the plastic film layers 44, 46 via adhesion promoting layers 49, 51, respectively. Generally, the adhesion promoting layers may be made from SiOₓC_{y}H_{z} for the metallic dielectric stack and may be made of some other tie layer or bonding layers for the polymer stack. Typically, when the metallic dielectric stack is utilized, one of the adhesion promoting layers 49, 51 may be a bonding layer as described in the other embodiments. When the polymer stack is utilized, both of the adhesion promoting layers 49, 51 can be tie layers. This is because the metallic dielectric stack is typically made by sputtering and/or a plasma coating, such as PECVD. The polymer stack, on the other hand, may be made by co-extrusion, extrusion, lamination and/or solvent casting.

Referring to Figure 7, another embodiment of window assembly 14b is illustrated therein. This embodiment is similar to the embodiment shown in Figure 6 with the exception that a second weathering layer 62 is located between the bottom side 36 of the substrate 32 and the plasma layer 60.

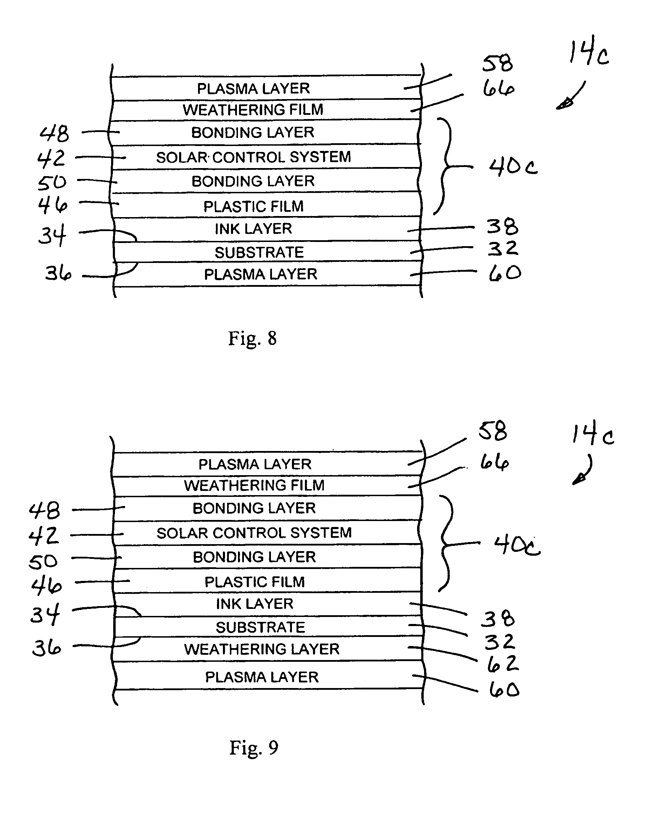

Referring to Figure 8, another embodiment of a window assembly 14c according to the principles of the present invention is shown therein. The window assembly 14c is similar to the window assembly 14a shown in Figure 4 with the exception that the first weathering layer 56 and the first plastic film layer 44 have been removed. Additionally, a weathering film layer 66 has been added. The non-rigid weathering film layer is located between the bonding layer 48 and the plasma layer 58. The weathering film layer 66 is bonded to the solar control system 42 via the bonding layer 48. The weathering film layer 66 may further be made from at least one of acrylic, polyurethane, flouropolymer, ionomer, siloxane, and combinations thereof. The weathering film layer 66 may include ultraviolet absorbers. The weathering film is produced by extrusion, co-extrusion, lamination, extrusion-lamination, extrusion-coating, roller-coating, and the like. Therefore, the solar control assembly 40c includes the bonding layers 48, 50, the solar control system 42 and the plastic film 46.

Referring to Figure 9, yet another embodiment of the window assembly 14c is shown. This embodiment is similar to the window assembly 14c of Figure 8 with the exception that a second weathering layer 62 is located between the bottom side 36 of the substrate 32 and the plasma layer 60.

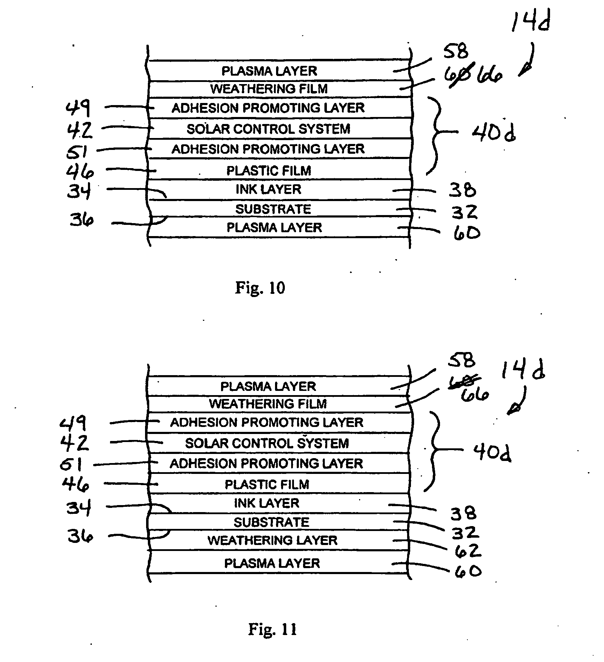

Referring now to Figure 10, another embodiment of a window assembly 14d according to the principles of the present invention is shown therein. The window assembly 14d is similar to the window assembly 14b of Figure 6 with the exception that the first weathering layer 56 and the first plastic film layer 44 has been removed. Additionally, a weathering film layer 66 has been added. The weathering film layer 66 is located between the adhesion promoting layer 49 and the plasma layer 58. The weathering film layer 66 is attached to the solar control system 42 via the adhesion promoting layer 49. Therefore, the weathering film layer 66 may from at least one of acrylic, polyurethane, flouropolymer, ionomer, siloxane, and combinations thereof. The weathering film layer 66 may include ultraviolet absorbers. Similar to the embodiment shown in Figure 6, typically when the metallic dielectric stack is utilized, one of the adhesion promoting layers 49, 51 may be a bonding layer as described in the other embodiments. When the polymer stack is utilized, both of the adhesion promoting layers 49, 51 can be tie layers or bonding layers. This is because the metallic dielectric stack is typically made by sputtering and/or a plasma coating, such as PECVD. The polymer stack, on the other hand, may be made by co-extrusion, extrusion, lamination and/or solvent casting.

Referring to Figure 11, another embodiment of the window assembly 14d is shown. This embodiment differs from the embodiment of Figure 10 in that a second weathering layer 62 is located between the bottom side 36 of the substrate 32 and the second plasma layer 60.

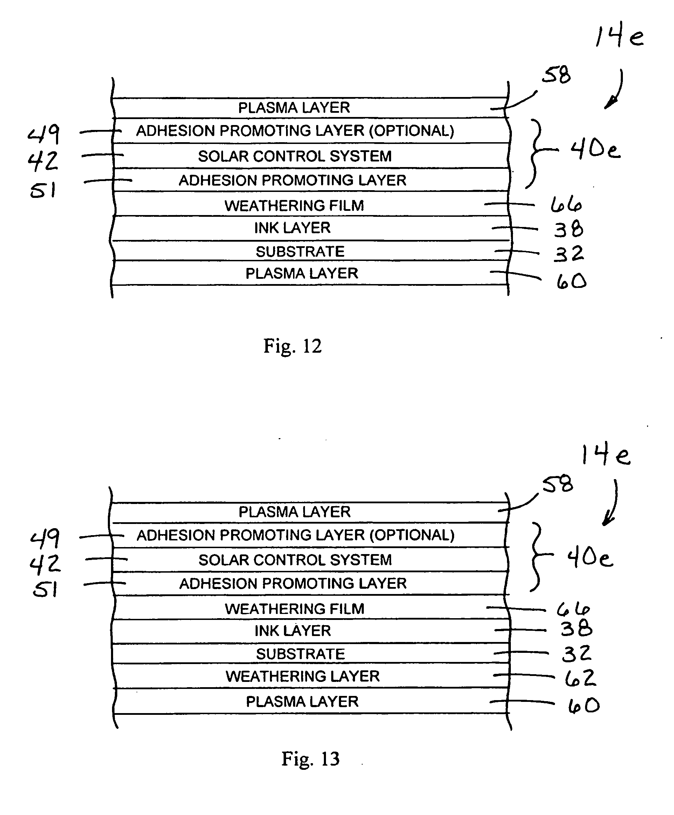

Referring to Figure 12, another embodiment of the window assembly 14e is shown. In this embodiment, the solar control assembly 40e includes the solar control system 42 and adhesion promoting layers 49, 51. Typically, in this case a metallic dielectric stack is used for the solar control system 42 where weathering and UV protection is also provided. If a polymer stack is used, it is typically made from weatherable materials such as acrylic, TPU, flouropolymer, ionomer, siloxane and combinations thereof. The adhesion promoting layer 49 is optional. Additionally, the solar control assembly 40e is located between the first plasma layer 58 and the weathering film 66.

Referring to Figure 13, another embodiment of the window assembly 14e is shown. This embodiment differs from the embodiment in Figure 12 in that a second weathering layer 62 is located between the substrate 32 and the second plasma layer 60.

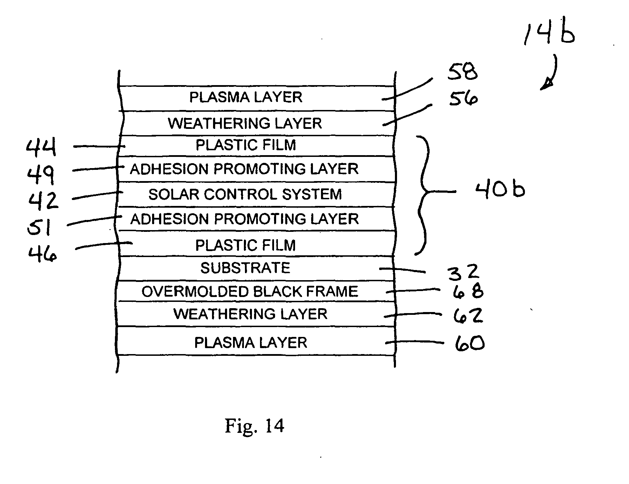

Referring to Figure 14, another embodiment of window assembly 14b is illustrated therein. This embodiment is similar to the embodiment shown in Figure 7 with the exception that an overmolded black frame 68 is applied to the bottom side 36 of the substrate 32, between the bottom side 36 of the substrate 32 and the optional weathering layer 62. As such, the overmolded black frame 68 is equally applicable to all embodiments described. The overmolded black frame 68 also surrounds the periphery of the substrate 32.

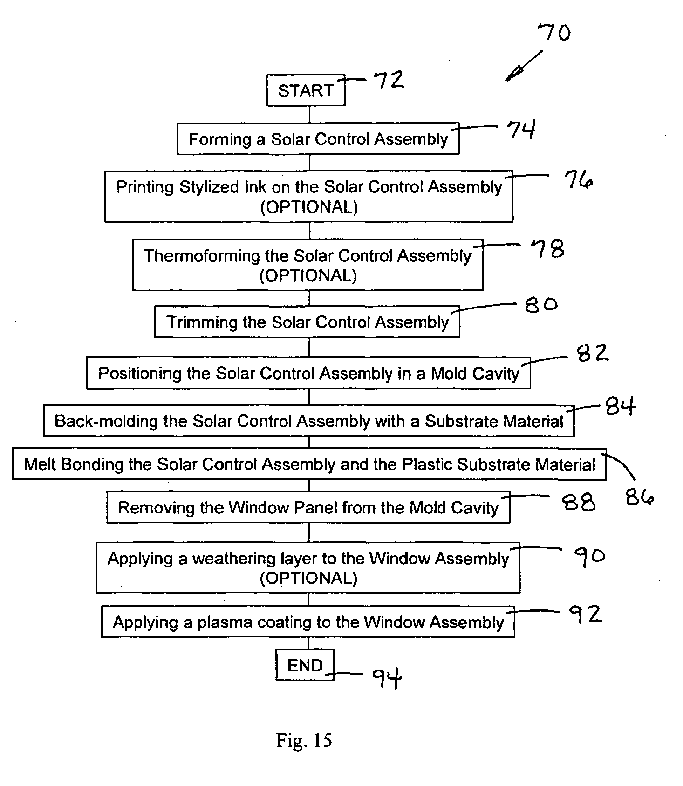

Referring to Figure 15, a method 70 of producing the window assembly 14 is shown, the method 70 starting as indicated by block 72. First, as indicated by block 74, the solar control assembly is formed. The solar control assembly may be formed by extrusion, co-extrusion, lamination, solvent casting, sputtering or similar process.

As shown in block 76, an optional styled ink layer may be applied to the solar control assembly. The stylized ink layer may be applied by screen printing, pad printing, membrane image transfer printing, transfer printing, ink jet printing, digital printing, robotic dispensing, or mask and spray. Optionally, as indicated by block 78, the solar control assembly may be thermoformed. This thermoforming process may be done by vacuum thermoforming, pressure assisted thermoforming, drape forming or cold forming.

Thereafter, as shown in blocks 80 and 82, the solar control assembly is then trimmed and position to fit with a mold cavity. Once in the mold cavity, as shown in block 84, a substrate material is back molded with a substrate material. This may be accomplished by utilizing injection molding, compression molding, injection-compression molding, multicomponent molding, multi-color molding or multi-material molding process.

Afterwards, as indicated by blocks 86 and 88, the solar control assembly and substrate material are hot melted, thereby forming the window panel, which is then removed from the mold cavity. As shown in block 90, an optional weathering layer may be applied to the window assembly. Thereafter, a plasma coating is applied to the window assembly via a PECVD process as shown in block 92. Block 94 denotes the completion of method 70.

As a person skilled in the art will readily appreciate, the above description is meant as an illustration of implementation of the principles of this invention.

## Claims

1. A window assembly (14a,14b) having solar control properties, the assembly comprising:
a substrate (32) having a first side (34) and a second side (36);
a first plasma layer (58) adjacent to the first side (34) of the substrate (32);
a first weathering layer (56) located between the first side (34) of the substrate (32) and the plasma layer (58); and **characterized by**
a solar control assembly (40a,40b) located between the first side (34) of the substrate (32) and the weathering layer (56), the solar control assembly (40a,40b) further comprising a solar control system (42) located between two plastic film layers (44,46);
an ink layer (38) provided on the solar control assembly (40a,40b) and located between the first side (34) of the substrate (32) and the solar control assembly (40a,40b) and/or an overmolded black component (68) located between the second side (36) of the substrate (32) and a second plasma layer (60) surrounding the periphery of the substrate (32);
wherein the solar control assembly (40a,40b) further comprises one of bonding layers (48,50) located between the plastic film layers (44,46) and the solar control system (42), whereby the bonding layers (48,50) attach the solar control system (42) to the plastic film layers (44,46), and
adhesion promoting layers (49,51) located between the plastic film layers (44,46) and the solar control system (42), whereby the adhesion promoting layers (59,51) attach the solar control system (42) to the plastic film layers (44,46).

2. The assembly of claim 1, wherein the first plasma layer (58) further comprises an ultraviolet absorber.

3. The assembly of claim 1, wherein the plastic film layers (44,46) are made from at least one of the polycarbonate, polymethyl methyacrylate, polyester, polyamide, thermoplastic polyurethane and combinations thereof.

4. The assembly of claim 1, wherein the solar control system (42) is one of a metallic dielectric stack and a polymer stack.

5. The assembly of claim 4, wherein the metallic dielectric stack further comprises:
at least one metallic layer having a first refractive index; and
at least one dielectric layer having a second refractive index, wherein the second refractive index is different than the first refractive index.

6. The assembly of claim 5, wherein the at least one metallic layer is made from at least one of silver and silver alloys, gold, copper, platinum, rhenium, aluminium, nickel, chromium or alloys and combinations thereof.

7. The assembly of claim 5, wherein the at least one dielectric layer is made from at least one of tin oxide (SnO₂), zinc oxide (ZnO), indium oxide (In₂O₃), indium tin oxide (ITO), titanium dioxide (TiO₂) antimony tin oxide (ATO), SiOₓC_{y}H_{z}, silicon dioxide (SiO₂), aluminium dioxide (Al₂O₃), silicon nitride (Si₃N₄), zinc sulphide (ZnS), and combinations thereof.

8. The assembly of claim 4, wherein the polymer stack further comprises:
at least one first polymeric layer having a first refractive index; and
at least one second polymeric layer having a second refractive index, wherein the second refractive index is different than the first refractive index.

9. The assembly of claim 8, wherein the at least one first polymeric layer and at least one second polymeric layer are made from one of polyester, acrylic, polyester acrylic blends and copolymer.

10. The assembly of claim 1, wherein the solar control assembly (40a, 40b) comprises bonding layers (48, 50), wherein the bonding layers (48,50) are made from at least one of polyurethane, acrylic, polyester, aromatic polycarbonate, polyester-carbonate, polycyanoacrylate, copolyester hot melt adhesive and combinations thereof.

11. The assembly of claim 1, wherein the solar control assembly (40a, 40b) comprises adhesion promoting layers (49, 51) wherein the adhesion promoting layers (49,51) are made from SiOₓC_{y}H_{z}.

12. The assembly of claim 1, wherein the solar control system (42) further comprises a base layer (52).

13. The assembly of claim 12, wherein the base layer (52) is polyethylene terephtalate, polycarbonate, polycarbonate/polyester blend, polyvinyl butyral, polymethyl methyacrylate and combinations thereof.

14. The assembly of claim 1, wherein the substrate (32) is a material comprising at least one of the polycarbonate, polyamide, thermoplastic polyurethane, polymethyl methacrylate, polyester, polycarbonate/polyester blends, and combinations thereof.

15. The assembly of claim 14, wherein the material further comprises glass fibers.

16. The assembly of claim 1, wherein the first weathering layer (56) is made from at least one of acrylic, polyurethane, silicon hard coat, and combinations thereof.

17. The assembly of claim 1, wherein the first weathering layer (56) further comprises ultraviolet absorbers.

18. The assembly of claim 1, further comprising a second plasma layer (60) located adjacent to the second side (36) of the substrate (32).

19. The assembly of claim 18, further comprising a second weathering layer (62) located between the second side (36) of the substrate (32) and the second plasma layer (60).

20. The assembly of claim 19, wherein the second weathering layer (62) is made from at least one of acrylic, polyurethane, silicon hard coat, and combinations thereof.

21. The assembly of claim 19, wherein the second weathering layer (62) further comprises ultraviolet absorbers.

22. The assembly of one of claims 1-21 wherein the first weathering layer (56) is a weathering film.

23. The assembly of claim 22, wherein the weathering film is made from at least one of acrylic, polyurethane, flouropolymer, ionomer, siloxane, and combinations thereof.

24. A method (70) of producing a window assembly, the method being **characterized by** the steps of:
forming a solar control assembly having a solar control system located between two plastic film layers;
printing a stylized ink on the solar control assembly;
trimming the solar control assembly;
positioning the solar control assembly in a mold cavity;
back molding the mold cavity with a plastic substrate material;
melt bonding the solar control assembly to the plastic substrate material to form the window assembly;
removing the window assembly from the mold cavity;
applying a weathering layer to the window assembly and
applying a plasma coating on at least one side of the window assembly.

25. The method of claim 24, further comprising the step of thermoforming the solar control assembly.

## Patentansprüche

1. Fensterbaugruppe (14a, 14b), die Eigenschaften der Solarsteuerung hat, wobei die Baugruppe Folgendes umfasst:
ein Substrat (32), das eine erste Seite (34) und eine zweite Seite (36) hat;
eine erste Plasmaschicht (58), die an die erste Seite (34) des Substrats (32) grenzt;
eine erste Wetterschicht (56), die sich zwischen der ersten Seite (34) des Substrats (32) und der Plasmaschicht (58) befindet; und die **gekennzeichnet ist durch**
eine Solarsteuerungsbaugruppe (40a, 40b), die sich zwischen der ersten Seite (34) des Substrats (32) und der Wetterschicht (56) befindet, wobei die Solarsteuerungsbaugruppe (40a, 40b) ferner ein Solarsteuerungssystem (42) umfasst, das sich zwischen zwei Kunststofffilmschichten (44, 46) befindet;
eine Farbschicht (38), die auf der Solarsteuerungsbaugruppe (40a, 40b) vorgesehen ist und sich zwischen der ersten Seite (34) des Substrats (32) und der Solarsteuerungsbaugruppe (40a, 40b) und/oder einer umgespritzten schwarzen Komponente (68) befindet, die sich zwischen der zweiten Seite (36) des Substrats (32) und einer zweiten Plasmaschicht (60) befindet, die die Peripherie des Substrats (32) umgibt;
wobei die Solarsteuerungsbaugruppe (40a, 40b) ferner eine der Bindungsschichten (48, 50) umfasst, die sich zwischen den Kunststofffilmschichten (44, 46) und dem Solarsteuerungssystem (42) befinden, wobei die Bindungsschichten (48, 50) das Solarsteuerungssystem (42) an den Kunststofffilmschichten (44, 46) befestigen, und
Haftvermittlungsschichten (49, 51), die sich zwischen den Kunststofffilmschichten (44, 46) und dem Solarsteuerungssystem (42) befinden, wobei die Haftvermittlungsschichten (59, 51) das Solarsteuerungssystem (42) an den Kunststofffilmschichten (44, 46) befestigen.

2. Baugruppe nach Anspruch 1, wobei die erste Plasmaschicht (58) ferner einen Ultraviolettabsorber umfasst.

3. Baugruppe nach Anspruch 1, wobei die Kunststofffilmschichten (44, 46) aus Polycarbonat, Polymethylmethylacrylat, Polyester, Polyamid, thermoplastischem Polyurethan und/oder Kombinationen derselben hergestellt sind.

4. Baugruppe nach Anspruch 1, wobei das Solarsteuerungssystem (42) ein Metall-Dielektrikumsstapel und/oder ein Polymerstapel ist.

5. Baugruppe nach Anspruch 4, wobei der Metall-Dielektrikumsstapel ferner Folgendes umfasst:
mindestens eine Metallschicht, die einen ersten Brechungsindex hat; und
mindestens eine dielektrische Schicht, die einen zweiten Brechungsindex hat, wobei der zweite Brechungsindex sich vom ersten Brechungsindex unterscheidet.

6. Baugruppe nach Anspruch 5, wobei die mindestens eine Metallschicht aus mindestens einem der Folgenden hergestellt ist: Silber und Silberlegierungen, Gold, Kupfer, Platin, Rhenium, Aluminium, Nickel, Chrom oder Legierungen und Kombinationen derselben.

7. Baugruppe nach Anspruch 5, wobei die mindestens eine dielektrische Schicht aus Zinnoxid (SnO₂) Zinkoxid (ZnO), Indiumoxid (In₂O₃), Indiumzinnoxid (ITO), Titandioxid (TiO₂), Antimonzinnoxid (ATO), SiOₓC_{y}H_{z}, Siliziumdioxid (SiO₂), Aluminiumdioxid (Al₂O₃), Siliziumnitrid (Si₃N₄), Zinksulfid (ZnS) und/oder Kombinationen derselben hergestellt ist.

8. Baugruppe nach Anspruch 4, wobei der Polymerstapel ferner Folgendes umfasst:
mindestens eine erste Polymerschicht, die einen ersten Brechungsindex hat; und
mindestens eine zweite Polymerschicht, die einen zweiten Brechungsindex hat, wobei der zweite Brechungsindex sich vom ersten Brechungsindex unterscheidet.

9. Baugruppe nach Anspruch 8, wobei die mindestens eine erste Polymerschicht und mindestens eine zweite Polymerschicht aus Polyester, Acryl, Polyesteracrylmischungen und/oder Copolymer hergestellt sind.

10. Baugruppe nach Anspruch 1, wobei die Solarsteuerungsbaugruppe (40a, 40b) Bindungsschichten (48, 50) umfasst, wobei die Bindungsschichten (48, 50) aus Polyurethan, Acryl, Polyester, aromatischem Polycarbonat, Polyestercarbonat, Polycyanoacrylat, Copolyester-Heißschmelzklebstoff und/oder Kombinationen derselben hergestellt sind.

11. Baugruppe nach Anspruch 1, wobei die Solarsteuerungsbaugruppe (40a, 40b) Haftvermittler (49, 51) umfasst, wobei die Haftvermittler (49, 51) aus SiOₓC_{y}H_{z} hergestellt sind.

12. Baugruppe nach Anspruch 1, wobei das Solarsteuerungssystem (42) ferner eine Basisschicht (52) umfasst.

13. Baugruppe nach Anspruch 12, wobei die Basisschicht (52) aus Polyethylenterephthalat, Polycarbonat, Polycarbonat/Polyester-Mischung, Polyvinylbutyral, Polymethylmethylacrylat und Kombinationen derselben besteht.

14. Baugruppe nach Anspruch 1, wobei das Substrat (32) ein Material ist, das Polycarbonat, Polyamid, thermoplastisches Polyurethan, Polymethylmethacrylat, Polyester, Polycarbonat/Polyester-Mischung und/oder Kombinationen derselben umfasst.

15. Baugruppe nach Anspruch 14, wobei das Material ferner Glasfasern umfasst.

16. Baugruppe nach Anspruch 1, wobei die erste Wetterschicht (56) aus Acryl, Polyurethan, Siliziumhartschicht und/oder Kombinationen derselben hergestellt ist.

17. Baugruppe nach Anspruch 1, wobei die erste Wetterschicht (56) ferner Ultraviolettabsorber umfasst.

18. Baugruppe nach Anspruch 1, die ferner eine zweite Plasmaschicht (60) umfasst, welche sich neben der zweiten Seite (36) des Substrats (32) befindet.

19. Baugruppe nach Anspruch 18, die ferner eine zweite Wetterschicht (62) umfasst, welche sich zwischen der zweiten Seite (36) des Substrats (32) und der zweiten Plasmaschicht (60) befindet.

20. Baugruppe nach Anspruch 19, wobei die zweite Wetterschicht (62) aus Acryl, Polyurethan, Siliziumhartschicht und/oder Kombinationen derselben hergestellt ist.

21. Baugruppe nach Anspruch 19, wobei die zweite Wetterschicht (62) ferner Ultraviolettabsorber umfasst.

22. Baugruppe nach einem der Ansprüche 1-21, wobei die erste Wetterschicht (56) ein Wetterfilm ist.

23. Baugruppe nach Anspruch 22, wobei der Wetterfilm aus Acryl, Polyurethan, Fluorpolymer, Ionomer, Siloxan und/oder Kombinationen derselben hergestellt ist.

24. Verfahren (70) zum Herstellen einer Fensterbaugruppe, wobei das Verfahren durch die folgenden Schritte gekennzeichnet ist:
Bilden einer Solarsteuerungsbaugruppe, die ein Solarsteuerungssystem hat, welches sich zwischen zwei Kunststofffilmschichten befindet;
Drucken eines stilisierten Farbstoffs auf der Solarsteuerungsbaugruppe;
Abgleichen der Solarsteuerungsbaugruppe;
Positionieren der Solarsteuerungsbaugruppe in einem Formhohlraum;
Hinterspritzen des Formhohlraums mit einem Kunststoffsubstratmaterial;
Schmelzbindung der Solarsteuerungsbaugruppe an dem Kunststoffsubstratmaterial, um die Fensterbaugruppe zu bilden;
Entfernen der Fensterbaugruppe aus dem Formhohlraum;
Auftragen einer Wetterschicht auf die Fensterbaugruppe, und
Auftragen einer Plasmabeschichtung auf mindestens eine Seite der Fensterbaugruppe.

25. Verfahren nach Anspruch 24, das ferner den Schritt des Thermoformens der Solarsteuerungsbaugruppe umfasst.

## Revendications

1. Assemblage de fenêtre (14a, 14b) ayant des propriétés de contrôle solaire, l'assemblage comprenant :
un substrat (32) ayant un premier côté (34) et un deuxième côté (36) ;
une première couche déposée par plasma (58) adjacente au premier côté (34) du substrat (32) ;
une première couche de dégradation aux intempéries (56) localisée entre le premier côté (34) du substrat (32) et la couche déposée par plasma (58) ;
**caractérisé par**
un assemblage de contrôle solaire (40a, 40b) situé entre le premier côté (34) du substrat (32) et la couche de dégradation aux intempéries (56), l'assemblage de contrôle solaire (40a, 40b) comprenant en outre un système de contrôle solaire (42) situé entre deux couches de films plastiques (44, 46) ;
une couche d'encre (38) disposée sur l'assemblage de contrôle solaire (40a, 40b) et située entre le premier côté (34) du substrat (32) et l'assemblage de contrôle solaire (40a, 40b) et/ou un composant noir surmoulé (68) situé entre le deuxième côté (36) du substrat (32) et une deuxième couche déposée par plasma (50) entourant la périphérie du substrat (32) ;
dans lequel l'assemblage de contrôle solaire (40a, 40b) comprend en outre l'un des éléments suivants :
- des couches de collage (48, 50) situées entre les couches de films plastiques (44, 46) et le système de contrôle solaire (42), de façon que les couches de collage (48, 50) attachent le système de contrôle solaire (42) aux couches de films plastiques (44, 46), et
- des couches promotrices d'adhérence (49, 51) situées entre les couches de films plastiques (44, 46) et le système de contrôle solaire (42), de façon que les couches promotrices d'adhérence (59, 51) attachent le système de contrôle solaire (42) aux couches de films plastiques (44, 46).

2. Assemblage selon la revendication 1, dans lequel la première couche déposée par plasma (58) comprend en outre un agent absorbant les ultraviolets.

3. Assemblage selon la revendication 1, dans lequel les couches de films plastiques (44, 46) sont faites d'au moins l'un des composés suivants : un polycarbonate, le poly(méthacrylate de méthyle), un polyester, un polyamide, un polyuréthane thermoplastique et leurs combinaisons.

4. Assemblage selon la revendication 1, dans lequel le système de contrôle solaire (42) est soit un empilement diélectrique métallique soit un empilement polymère.

5. Assemblage selon la revendication 4, dans lequel l'empilement diélectrique métallique comprend en outre :
au moins une couche métallique ayant un premier indice de réfraction ; et
au moins une couche diélectrique ayant un deuxième indice de réfraction,
dans lequel le deuxième indice de réfraction est différent du premier indice de réfraction.

6. Assemblage selon la revendication 5, dans lequel l'au moins une couche métallique est faite d'au moins l'un des métaux suivants : l'argent et les alliages d'argent, l'or, le cuivre, le platine, le rhénium, l'aluminium, le nickel, le chrome ou leurs alliages et combinaisons.

7. Assemblage selon la revendication 5, dans lequel l'au moins une couche diélectrique est faite d'au moins l'un des composés suivants : l'oxyde d'étain (SnO₂) l'oxyde de zinc (ZnO), l'oxyde d'indium (In₂O₃), l'oxyde d'indium et d'étain (ITO), le dioxyde de titane (TiO₂) l'oxyde d'antimoine et d'étain (ATO), SiOₓC_{y}H_{z}, le dioxyde de silicium (SiO₂), le dioxyde d'aluminium (Al₂O₃), le nitrure de silicium (Si₃N₄), le sulfure de zinc (ZnS) et leurs combinaisons.

8. Assemblage selon la revendication 4, dans lequel l'empilement polymère comprend en outre :
au moins une première couche polymère ayant un premier indice de réfraction ; et
au moins une deuxième couche polymère ayant un deuxième indice de réfraction,
dans lequel le deuxième indice de réfraction est différent du premier indice de réfraction.

9. Assemblage selon la revendication 8, dans lequel l'au moins une première couche polymère et l'au moins une deuxième couche polymère sont faites de l'un des composés suivants : un polyester, un acrylique, et des mélanges et copolymères de polyester et d'acrylique.

10. Assemblage selon la revendication 1, dans lequel l'assemblage de contrôle solaire (40a, 40b) comprend des couches de collage (48, 50), lesquelles couches de collage (48, 50) sont faites d'au moins l'un des composés suivants : un polyuréthane, un acrylique, un polyester, un polycarbonate aromatique, un polyester-carbonate, un polycyanoacrylate, un adhésif thermofusible de type copolyester, et leurs combinaisons.

11. Assemblage selon la revendication 1, dans lequel l'assemblage de contrôle solaire (40a, 40b) comprend des couches promotrices d'adhérence (49, 51), lesquelles couches promotrices d'adhérence (49, 51) sont faites en SiOₓC_{y}H_{z}.

12. Assemblage selon la revendication 1, dans lequel le système de contrôle solaire (42) comprend en outre une couche de base (52).

13. Assemblage selon la revendication 12, dans lequel la couche de base (52) est en poly(téréphtalate d'éthylène), en polycarbonate, en mélange de polycarbonate/polyester, en poly(butyral de vinyle), en poly(méthacrylate de méthyle) et en leurs combinaisons.

14. Assemblage selon la revendication 1, dans lequel le substrat (32) est un matériau comprenant au moins l'un des composés suivants : un polycarbonate, un polyamide, un polyuréthane thermoplastique, le poly(méthacrylate de méthyle), un polyester, un mélange de polycarbonate/polyester, et leurs combinaisons.

15. Assemblage selon la revendication 14, dans lequel le matériau comprend en outre des fibres de verre.

16. Assemblage selon la revendication 1, dans lequel la première couche de dégradation aux intempéries (56) est faite d' au moins l'un des composés suivants : un acrylique, un polyuréthane, un revêtement dur siliconé, et leurs combinaisons.

17. Assemblage selon la revendication 1, dans lequel la première couche de dégradation aux intempéries (56) comprend en outre des agents absorbant les ultraviolets.

18. Assemblage selon la revendication 1, comprenant en outre une deuxième couche déposée par plasma (60) située adjacente au deuxième côté (36) du substrat (32).

19. Assemblage selon la revendication 18, comprenant en outre une deuxième couche de dégradation aux intempéries (62) située entre le deuxième côté (36) du substrat (32) et la deuxième couche déposée par plasma (60).

20. Assemblage selon la revendication 19, dans lequel la deuxième couche de dégradation aux intempéries (62) est faite d'au moins l'un des composés suivants : un acrylique, un polyuréthane, un revêtement dur siliconé, et leurs combinaisons.

21. Assemblage selon la revendication 19, dans lequel la deuxième couche de dégradation aux intempéries (62) comprend en outre des agents absorbant les ultraviolets.

22. Assemblage selon l'une quelconque des revendications 1 à 21, dans lequel la première couche de dégradation aux intempéries (56) est un film de dégradation aux intempéries.

23. Assemblage selon la revendication 22, dans lequel le film de dégradation aux intempéries est fait d'au moins l'un des composés suivants : un acrylique, un polyuréthane, un polymère fluoré, un ionomère, un siloxane, et leurs combinaisons.

24. Procédé (70) pour produire un assemblage de fenêtre, le procédé étant **caractérisé par** les étapes consistant à :
former un assemblage de contrôle solaire ayant un système de contrôle solaire situé entre deux couches de films plastiques ;
imprimer une encre stylisée sur l'assemblage de contrôle solaire ;
tailler l'assemblage de contrôle solaire ;
positionner l'assemblage de contrôle solaire dans une cavité de moule ;
contre-mouler la cavité de moule avec un matériau de substrat plastique ;
coller à l'état fondu l'assemblage de contrôle solaire au matériau de substrat plastique pour former l'assemblage de fenêtre ;
retirer l'assemblage de fenêtre de la cavité de moule ;
appliquer une couche de dégradation aux intempéries sur l'assemblage de fenêtre ; et
appliquer un revêtement déposé par plasma sur au moins un côté de l'assemblage de fenêtre.

25. Procédé selon la revendication 24, comprenant en outre l'étape consistant à thermoformer l'assemblage de contrôle solaire.
